# EUROPEAN PATENT APPLICATION

(11) **EP 2 871 055 A1**
(43) Date of publication of application: **13.05.2015**
(21) Application number: 13813039.8
(22) Date of filing: 04.07.2013
(51) Int. Cl.: B32B 17/10, C03C 27/12

(54) **GLASS RESIN LAMINATE**

(30) Priority: 05.07.2012 JP 2012151069
(71) Applicant: Nippon Electric Glass Co., Ltd., Otsu-shi, Shiga 520-8639 (JP)
(72) Inventor: HASEGAWA Yoshinori, Otsu-shi Shiga 520-8639 (JP); NODA Takayuki, Otsu-shi Shiga 520-8639 (JP)
(74) Representative: Tetzner, Michael
(86) International application number: PCT/JP2013/068335
(87) International publication number: WO 2014/007313

(57) **Abstract**

Provided is a glass-resin laminate (1) having a laminating structure of at least three layers, the glass-resin laminate (1) including: a layer including a glass sheet (2); a layer including a resin layer (3); and an adhesive layer (4) for bonding the glass sheet (2) and the resin layer (3), in which a spectral transmittance of the adhesive layer (4) in at least a wavelength range of from 430 nm to 680 nm is 90% or more.

## Description

### Technical Field

The present invention relates to a glass material to be used for buildings, vehicles, frames, display cases, glass substrates for devices as typified by flat panel displays such as liquid crystal displays and OLED displays, solar cells, lithium ion batteries, touch panels, and electronic paper, digital signages or light guide plates to be used for the digital signages, cover glasses for devices as typified by OLED lighting devices, packages for medical products, and the like. More specifically, the present invention relates to a glass material that is lightweight and excellent in weather resistance and visibility.

### Background Art

Glass sheets are excellent in weather resistance, chemical resistance, and abrasion resistance, and are also excellent in lighting property because of its transparency. Therefore, the glass sheets are widely used for windowmaterials of general buildings, high-rise buildings, or the like, skylight windows for roofs, frames, display cases, and window materials for vehicles or the like as typified by automobiles and trains.

However, glass is a brittle material, and hence has a problem of being vulnerable to physical impact and easily damaged. It is known that, when a flying object or a high-speed object hits a glass sheet, the glass sheet is easily broken, and that the glass sheet is also easily damaged due to thermal shock.

In order to solve the problem described above, many proposals have been made on a laminate in which a transparent resin material is laminated on a glass sheet. In common with glass that is an inorganic material, the transparent resin material is excellent in lighting property because of its transparency. Besides, the transparent resin material has an advantage of in its higher physical impact resistance than that of the glass, but has disadvantages in its inferior chemical resistance, weather resistance, and abrasion resistance to the glass, and lack of high quality texture unlike the glass. For example, in Patent Literature 1, there is proposed a glass laminate (glass-resin laminate) formed by sequentially laminating glass, polyvinyl butyral, polycarbonate, polyvinyl butyral, and glass. In Patent Literature 1, glass vulnerable to physical impact is supported by a transparent resin material so that the glass sheet is prevented from being damaged and scattered into pieces. Further, the transparent resin material is sandwiched by the glass sheets excellent in weather resistance and abrasion resistance so that the transparent resin material is prevented from being exposed to external environment. In this manner, the disadvantages of the glass sheet and the transparent resin material are compensated by the respective advantages.

### Citation List

Patent Literature 1: JP 06-000915 A

### Summary of Invention

### Technical Problems

However, the glass laminate, which is disclosed in Patent Literature 1, appears colorless and transparent when being observed from the front, but when being observed from an oblique direction (angle direction), the glass laminate may appear to be slightly colored yellow. In addition, in a case where the glass laminate, which is disclosed in Patent Literature 1, is used as a backlight unit for a liquid crystal display or a light guide plate for an advertising board, a guide board, and the like in a manner that an end portion of the glass laminate is irradiated with light from a light source such as an edge light, as an observed part of the glass laminate is distant from the edge light, the part may be perceived as exhibiting yellow.

On the other hand, the resin material has a wide variation in color as compared to the glass. Various resin materials are commercialized as colorless and highly transparent products, transparent colored products, opaque colored products, and the like, and those products are put into the market and used at various places. Those resin materials are not applied only as transparent windows, but the colored products are also applied as covers or cases for decorated products. Also in this case, as described above, there is a problem in that the resin product slightly exhibits yellow unlike the original color of the resin material.

The present invention has been made to solve the above-mentioned problems inherent in the related art, and has an obj ect to provide a laminate that is prevented from exhibiting yellow, maintained in original color characteristics of a resin material, and is capable of compensating disadvantages of a resin sheet in abrasion resistance and environmental resistance through use of a glass sheet as a surface layer.

### Solution to Problems

As a result of extensive studies, the inventors of the present invention have found the following matters. Even in a case where a visible light transmittance of a transparent adhesive layer exceeds 90%, when the transmittance of the transparent adhesive layer is as low as 90% or less on a shortest wavelength side (380 nm to 450 nm) and a longest wavelength side (650 nm to 780 nm) of a visible light wavelength range, the glass-resin laminate is observed as exhibiting color. In a transparent adhesive, in particular, a transmittance thereof on the short wavelength side tends to be low, and due to the influence of the low transmittance, the glass-resin laminate is observed as exhibiting yellow. With those findings, the inventors of the present invention have arrived at the present invention.

According to the invention of claim 1, there is provided a glass-resin laminate having a laminating structure of at least three layers, the glass-resin laminate comprising: a glass sheet layer; a resin layer; and an adhesive layer for bonding the glass sheet layer and the resin layer, wherein a spectral transmittance of the adhesive layer in at least a wavelength range of from 430 nm to 680 nm is 90% or more. The spectral transmittance herein refers to a sum of a collimated light transmittance and a diffused light transmittance at each wavelength. Further, in a case where a thickness of the adhesive layer changes, the description that the spectral transmittance of the adhesive layer in at least the wavelength range of from 430 nm to 680 nm is 90% or more means a spectral transmittance at each thickness. In a case where two or more adhesive layers are provided, the above description means that a spectral transmittance of the layers at the total thickness thereof is 90% or more.

According to the invention of claim 2, in the glass-resin laminate according to claim 1, the laminating structure comprises a laminating structure of five layers, the laminating structure of five layers comprising: two glass sheet layers arranged at both outermost-layers; one resin layer interposed between the two glass sheets; and two adhesive layers for bonding the two glass sheets and the one resin layer.

According to the invention of claim 3, in the glass-resin laminate according to claim 1 or 2, the resin layer is transparent. The description that the resin layer is transparent herein means that a visible light transmittance thereof is 90% or more. In a case where a thickness of the resin layer changes, the above description means a visible light transmittance at each thickness. In a case where two or more layers of the resin layer are provided, the above description means that a visible light transmittance of the resin layers at the total thickness thereof is 90% or more.

According to the invention of claim 4, in the glass-resin laminate according to any one of claims 1 to 3, a thickness of the adhesive layer is 50 to 800 µm.

According to the invention of claim 5, in the glass-resin laminate according to any one of claims 1 to 4, the glass sheet comprises alkali-free glass.

According to the invention of claim 6, in the glass-resin laminate according to any one of claims 1 to 5, the glass sheet is manufactured by an overflow downdraw method.

According to the invention of claim 7, in the glass-resin laminate according to any one of claims 1 to 6, the resin layer is made of a polycarbonate material or an acrylic material.

According to the invention of claim 8, in the glass-resin laminate according to any one of claims 1 to 7, a thickness of the glass sheet is 100 to 300 µm.

### Advantageous Effects of Invention

According to the invention of claim 1, the glass-resin laminate has the laminating structure of at least three layers. The glass-resin laminate comprises : the glass sheet; the resin layer; and the adhesive layer for bonding the glass sheet and the resin layer. The spectral transmittance of the adhesive layer in at least the wavelength range of from 430 nm to 680 nm is 90% or more. Thus, the glass-resin laminate can be prevented from exhibiting yellow, and the color characteristics of the resin layer can be sufficiently exerted without impairing the original coloration of the resin layer.

According to the invention of claim 2, the glass-resin laminate has the laminating structure of five layers. The laminating structure of five layers comprises: the two glass sheets arranged at both outermost-layers; the one resin layer interposed between the two glass sheets; and the two adhesive layer for bonding the two glass sheets and the one resin layer. Thus, the resin layer is sandwiched by the glass sheets excellent in weather resistance and abrasion resistance so that the resin layer inferior in weather resistance and abrasion resistance can be prevented from being exposed to external environment. Further, the glass sheets excellent in hand feeling and texture can be provided as the outermost layers.

According to the invention of claim 3, the resin layer is transparent. Thus, it is possible to provide a colorless and highly transparent glass-resin laminate.

According to the invention of claim 4, the thickness of the adhesive layer is 50 to 800 µm. Thus, a difference in thermal expansion between the glass sheet and the resin layer can be absorbed by the adhesive layer while the glass-resin laminate is prevented from exhibiting yellow so that the glass sheet and the resin layer can be prevented from being separated due to the thermal expansion.

According to the invention of claim 5, the glass sheet comprises the alkali-free glass. Thus, the weather resistance and chemical resistance of the glass sheet are enhanced so that it is possible to provide a glass-resin laminate suitable for a long-term use.

According to the invention of claim 6, the glass sheet is manufactured by the overflow downdraw method. Thus, the glass sheet having excellent surface quality can be mass-produced at low cost. The glass sheet manufactured by the overflow downdraw method is not required to be polished or ground.

According to the invention of claim 7, the resin layer is made of the polycarbonate material or the acrylic material, and thus the resin layer is excellent in transparency. In particular, in a case where the acrylic material is used, it is possible to provide a glass-resin laminate excellent in light guiding property.

According to the invention of claim 8, the thickness of the glass sheet is 100 to 300 µm. Thus, it is possible to provide a light weight glass-resin laminate.

### Brief Description of Drawings

FIG. 1a is a sectional view of a glass-resin laminate according to the present invention, in particular, a glass-resin laminate having a three-layer structure.
FIG. 1b is a sectional view of a glass-resin laminate according to the present invention, in particular, a glass-resin laminate having a five-layer structure.
FIG. 2 is an explanatory view of a forming apparatus for a glass sheet.

### Description of Embodiment

Now, description is made of a glass-resin laminate according to an exemplary embodiment of the present invention with reference to the drawings.

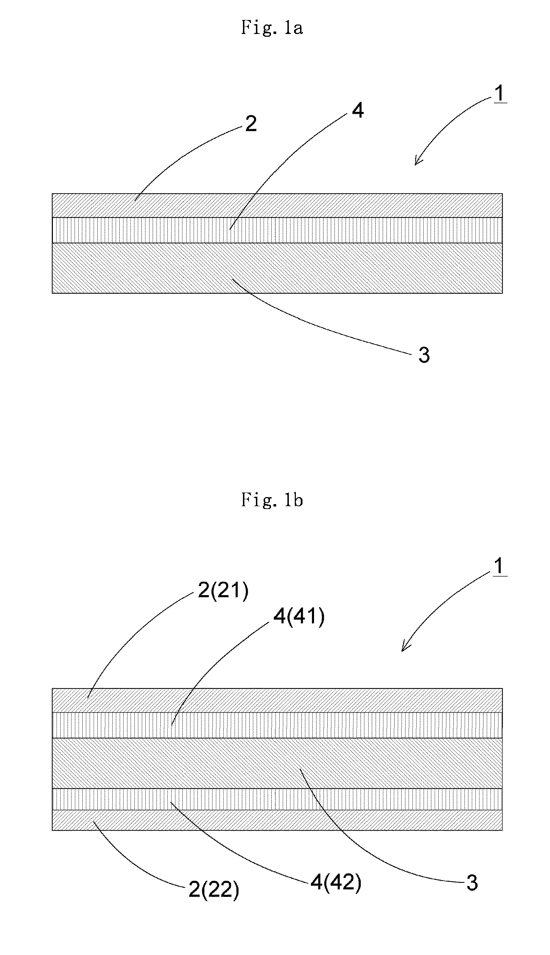

As illustrated in FIG. 1a, in a glass-resin laminate 1 according to the present invention, a glass sheet 2 and a resin layer 3 are bonded to each other through an intermediation of an adhesive layer 4.

As the glass sheet 2, silicate glass is used, preferably silica glass, borosilicate glass, soda lime glass, and aluminosilicate glass, most preferably alkali-free glass. In general, glass is excellent in weather resistance. However, in a case where an alkaline component is contained in the glass sheet 2, when the glass sheet 2 is continuously used in a situation of being exposed to external environment for a long period of time, cation removal occurs on a surface of the glass sheet 2, leading to occurrence of a so-called too-abundant soda phenomenon. As a result, the glass sheet 2 may have a coarse structure. Accordingly, light transmittance of the glass sheet 2 may deteriorate. Note that, the alkali-free glass herein refers to glass substantially free of an alkaline component (alkali metal oxide), and specifically, glass that contains the alkaline component at a weight ratio of 1,000 ppm or less. In the present invention, the weight ratio of the alkaline component is preferably 500 ppm or less, more preferably 300 ppm or less. Further, as the glass sheet 2, chemically tempered glass or physically tempered glass may be used.

A thickness of the glass sheet 2 is preferably 10 µm to 1,000 um, more preferably 50 µm to 500 um, most preferably 100 µm to 300 µm. As the thickness of the glass sheet is larger, the strength of the glass-resin laminate becomes higher. On the other hand, as the thickness of the glass sheet is smaller, the weight of the glass-resin laminate in terms of its thickness can be reduced. It is preferred that the thickness of the glass sheet 2 be smaller than a thickness of the resin layer 3. With this, in the glass-resin laminate 1, the ratio of the glass sheet 2 is reduced, and hence light-weighting of the glass-resin laminate 1 can be achieved. Further, in a case where the chemically tempered glass is used as the glass sheet 2, the thickness thereof is preferably 300 µm to 1,000 µm.

It is preferred that a density of the glass sheet 2 be lower. With this, light-weighting of the glass sheet 2 can be achieved, and therefore the light-weighting of the glass-resin laminate 1 can be achieved. Specifically, the density of the glass sheet 2 is preferably 2.6 g/cm³ or less, more preferably 2.5 g/cm³ or less.

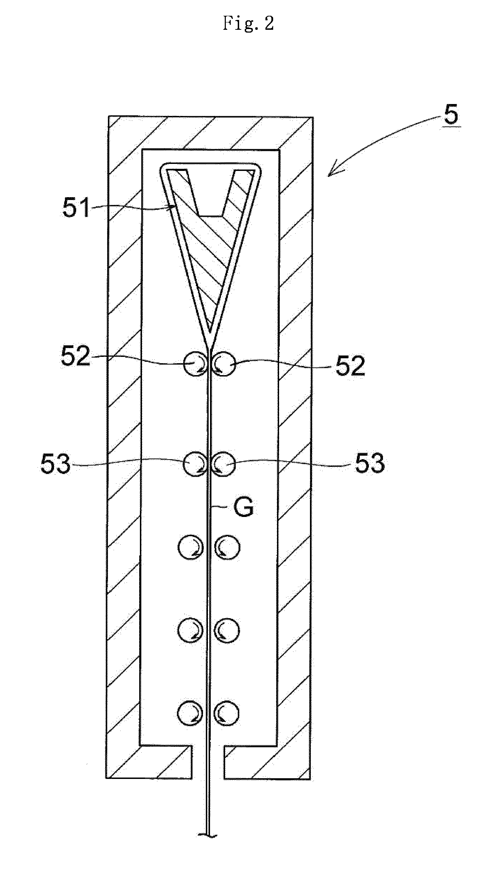

As illustrated in FIG. 2, it is preferred that the glass sheet 2 to be used in the present invention be formed by an overflow downdraw method. With this, the glass sheet 2 having excellent surface quality can be mass-produced at low cost. The overflow downdraw method refers to a forming method that does not involve contact of both surfaces of the glass sheet 2 with a forming member at the time of forming. Both the surfaces (light-transmissive surfaces) of the glass sheet 2 thus obtained are forged surfaces, and hence high surface quality can be obtained without polishing. With this, the glass sheet 2 and the resin layer 3 can be laminated accurately and precisely through an intermediation of the adhesive layer 4.

Inside a forming apparatus 5, a forming trough 51 having an outer surface with a wedge-like shape in cross section is arranged. Glass (molten glass), which is molten in a melting furnace (not shown), is fed into the forming trough 51 so that the molten glass overflows from a top part of the forming trough 51. Streams of the overflowing molten glass then flow along both side surfaces of the forming trough 51 having a wedge-like shape in cross section, and converge at a lower end of the forming trough 51 so that the molten glass starts to be formed into a glass ribbon G. Immediately after the streams of the molten glass converge at the lower end of the forming trough 51, the glass ribbon G is drawn downward by cooling rollers 52 while being restricted from contracting in its width direction. Thus, the glass ribbon G is thinned to a predetermined thickness. Next, the glass ribbon G thinned to the predetermined thickness is delivered by annealer rollers 53 and annealed in an annealing furnace (annealer) so that a thermal strain of the glass ribbon G is eliminated. In this manner, the glass ribbon G thus annealed is sufficiently cooled down to about room temperature. The glass ribbon G having flowed through the annealing furnace is cut out into predetermined dimensions by a cutting apparatus (not shown) provided below the forming apparatus 5. In this manner, the glass sheet 2 is formed.

The resin layer 3 is not particularly limited, and may be, for example, a colored, colorless, transparent, or opaque resin layer. There may be used, for example, polyethylene, polyvinyl chloride, polyethylene terephthalate, polyvinylidene chloride, polypropylene, polyvinyl alcohol, polyester, polystyrene, polyacrylonitrile, an ethylene-vinyl acetate copolymer, an ethylene-vinyl alcohol copolymer, an ethylene-methacrylic acid copolymer, acrylic, and polycarbonate. In particular, in terms of excellent transparency, it is preferred to use acrylic or polycarbonate. Further, for use that requires design ability, it is preferred to use acrylic whose color can be selected from among various colors.

The thickness of the resin layer 3 maybe set or selected as appropriate depending on a thickness of the glass sheet 2 to be used, a desired thickness of the glass-resin laminate 1, or the like. In a case where the glass-resin laminate 1 is to be used for windows or the like of buildings, it is preferred that the glass-resin laminate 1 be not bent, and hence it is preferred that the transparent resin layer 3 have a thickness to such an extent that the glass sheet 2 can be supported.

The resin layer 3 may be formed into a curved-surface shape including a recessed surface, a projected surface, or the like. In this case, the glass sheet 2 may be formed into a bent shape in conformity with the curved-surface shape of the resin layer 3, and the shape of the resin layer 3 is restricted by the glass sheet 2 having a shape fixed to a curved-surface shape. Thus, the effect of reinforcing the resin layer 3 with the glass sheet 2 is remarkable. Further, in a case where a glass sheet having a thickness of 10 µm to 300 µm is used as the glass sheet 2, the glass sheet 2 is deformed in conformity with the curved surface of the resin layer 3, and hence the glass-resin laminate 1 can be manufactured without forming the glass sheet 2 into a bent shape. In particular, in a case where the resin layer 3 is formed into a curved-surface shape including a recessed surface, the glass sheet 2 is formed in conformity with the curved surface of the resin layer 3, which is formed into the recessed surface, so that a compressive stress is generated on the surface of the glass sheet 2. Thus, the glass-resin laminate 1 having excellent impact absorption property as a whole can be obtained.

The glass sheet 2 and the resin layer 3 are bonded to each other through an intermediation of the adhesive layer 4. The adhesive layer 4 is required so that its spectral transmittance in at least a wavelength range of from 430 nm to 680 nm is 90% or more. With this, color characteristics of the resin layer 3 can be sufficiently exerted without impairing the original coloration of the resin layer 3. When a spectral transmittance of the adhesive layer 4 in a visible light short-wavelength range, such as in a wavelength range of 450 nm or less, is less than 90%, this adhesive layer 4 is not preferred because the glass-resin laminate 1 may be observed in a state of exhibiting yellow depending on its intended use. The spectral transmittance of the adhesive layer 4 in the wavelength range of from 430 nm to 680 nm is more preferably 92% or more, most preferably 94% or more.

A thickness of the adhesive layer 4 is preferably 25 µm to 1,000 µm, more preferably 50 µm to 800 µm, further preferably 50 µm to 500 µm. As the thickness of the adhesive layer 4 is larger, a difference in expansion and contraction due to a difference in thermal expansion between the resin layer 3 and the glass sheet 2 can be absorbed, but the spectral transmittance of the adhesive layer 4 in the wavelength range of from 430 nm to 680 nm is degraded. On the other hand, as the thickness of the adhesive layer 4 is smaller, the spectral transmittance thereof in the wavelength range of from 430 nm to 680 nm is enhanced, but the difference in expansion and contraction due to the difference in thermal expansion between the resin layer 3 and the glass sheet 2 is not easily absorbed. Therefore, the thickness of the resin layer 3 is most preferably 100 to 500 µm. Note that, in the present invention, even when the thickness of the adhesive layer 4 is larger, the spectral transmittance thereof in the wavelength range of from 430 nm to 680 nm does not become less than 90%.

A material for the adhesive layer 4 is not particularly limited as long as the spectral transmittance thereof in the wavelength range of from 430 nm to 680 nm is 90% or more. In the adhesion, there may be used a double-sided pressure-sensitive adhesive sheet, a thermoplastic adhesive sheet, a thermal crosslinking adhesive sheet, an energy curable liquid adhesive, or the like, and for example, there may be used, an optically transparent pressure-sensitive adhesive sheet, EVA, TPU, PVB, an ionoplast resin, an acrylic thermoplastic adhesive sheet, an ultraviolet curable adhesive, a thermosetting adhesive, a cold setting adhesive, or the like. In a case where an adhesive is used, it is preferred to use an adhesive that becomes transparent after the adhesion. Further, in a case where the adhesive layer 4 has ultraviolet shielding property (ultraviolet absorption), it is possible to prevent the resin layer 3 from being degraded due to ultraviolet radiation.

Further, a spectral transmittance of the adhesive layer 4 in a wavelength range of from 410 nm to 700 nm is more preferably 90% to 94% or more, and further, a spectral transmittance thereof in a wavelength range of from 380 nm to 780 nm is most preferably 90% to 94% or more because the adhesive layer 4 becomes substantially transparent in visibility.

A degree of opacity (haze) of the adhesive layer 4 is preferably 2% or less. With this, in a case where a material having a high degree of transparency, such as acrylic or polycarbonate, is used as the resin layer 3, a glass-resin laminate 1 having a high degree of transparency can be obtained. The degree of opacity (haze) of the adhesive layer 4 is more preferably 1% or less, further preferably 0.5% or less.

As illustrated in FIG. 1b, it is preferred that the glass-resin laminate 1 according to the present invention have a five-layer structure comprising a glass sheet, an adhesive layer, a resin layer, an adhesive layer, and a glass sheet. With this, the resin layer 3 is sandwiched by the glass sheets 2 excellent in weather resistance and abrasion resistance so that the resin layer 3 inferior in weather resistance and abrasion resistance can be prevented from being exposed to external environment. Further, the glass sheets 2 excellent in hand feeling and texture can be provided as outermost layers.

The thickness of the resin layer 3 is preferably equal to or more than a total thickness of glass sheets 21 and 22, more preferably equal to or more than three times as large as the thickness of each of the glass sheets 21 and 22. With this, in the glass-resin laminate 1, the ratio of the transparent resin layer 3 is increased, and hence the overall weight of the glass-resin laminate 1 can further be reduced so that the light-weighting of the glass-resin laminate 1 can be achieved more effectively. In a case where the thicknesses of the glass sheets 21 and 22 are different from each other, the thickness of the transparent resin layer 3 is preferably equal to or more than three times as large as the thickness of the larger one of the glass sheets. The thickness of the transparent resin layer 3 is more preferably equal to or more than ten times as large as the thickness of each of the glass sheets 21 and 22, most preferably equal to or more than twenty times as large as the thickness of each of the glass sheets 21 and 22.

As materials for the glass sheets 21 and 22, glass materials of the same kind or different kinds maybe used. For example, in a case where the glass-resin laminate 1 is to be used for windows or the like of buildings, as the glass sheet 21 to be positioned on a side that is exposed to external environment, alkali-free glass more excellent in weather resistance may be used, and as the glass sheet 22 to be positioned on a side facing internal environment such as an interior of a room or the like, soda lime glass or the like may be used. Further, similarly to the case of the adhesive layer 4, glass sheets more transparent for visible light are required, and spectral transmittances thereof in at least a wavelength range of from 430 nm to 680 nm are preferably 90% or more. With this, the color characteristics of the resin layer 3 can be sufficiently exerted without impairing the original coloration of the resin layer 3.

The thicknesses of the glass sheets 21 and 22 may be equal to or different from each other. For example, in a case where the glass-resin laminate 1 is to be used for windows or the like of buildings, the thickness of the glass sheet 21 to be positioned on the side that is exposed to external environment may be set to be relatively larger (for example, 100 µm), and the thickness of the glass sheet 22 to be positioned on the side facing internal environment such as an interior of a room or the like may be set to be relatively smaller (for example, 50 µm).

Note that, the present invention is not limited to the above-mentioned embodiment, and may be carried out in various modes. For example, in the above-mentioned embodiment, the glass-resin laminate having the three-layer structure or the five-layer structure is described, but the glass-resin laminate may have a seven-layer structure or may have even more layers.

### Examples

Now, the glass-resin laminate according to the present invention is described in detail by way of examples, but the present invention is not limited to the examples.

(Example 1) One rectangular glass sheet having a length of 300 mm, a width of 300 mm, and a thickness of 100 µm was prepared. As the glass sheet, alkali-free glass manufactured by Nippon Electric Glass Co., Ltd. was used. The glass sheet formed by the overflow downdraw method was used in an unpolished state as it was. As a resin layer, a rectangular translucent opal polycarbonate sheet having a length of 300 mm, a width of 300 mm, and a thickness of 1 mm (manufactured by Takiron Co. , Ltd.) was prepared. As an adhesive layer, a thermoplastic sheet (EVA) having a thickness of 150 µm was laminated on one surface of the resin layer, and then the glass sheet was further laminated thereon, to thereby manufacture a glass-resin laminate having a three-layer structure. Note that, spectral transmittances of the adhesive layer at wavelengths of from 410 nm to 700 nm were 90% or more at the respective wavelengths. Further, an ultraviolet absorbing agent was added to the adhesive layer, and hence the adhesive layer had ultraviolet shielding property. When the obtained glass-resin laminate was observed from a direction obliquely tilted at 45°, it was confirmed that translucency of the opal polycarbonate sheet was reproduced as it was, and yellow was not exhibited. Further, when a weather resistance test was conducted on a glass surface side of the obtained glass-resin laminate for 1,000 hours with a xenon weather meter, it was confirmed that polycarbonate was not degraded. This example may be suitably applicable to lighting covers.

(Example 2) Two rectangular glass sheets each having a length of 600 mm, a width of 600 mm, and a thickness of 700 µm were prepared. As the glass sheets, alkali-free glass manufactured by Nippon Electric Glass Co., Ltd. was used. The glass sheets each formed by the overflow downdraw method were used in an unpolished state as they were. As a resin layer, a rectangular opaque and white acrylic sheet having a length of 600 mm, a width of 600 mm, and a thickness of 6 mm (manufactured by Mitsubishi Rayon Co., Ltd.) was prepared. As adhesive layers, thermoplastic sheets (EVA) each having a thickness of 400 µm were laminated on both surfaces of the resin layer, and then the two glass sheets were bonded so as to sandwich the resin layer, to thereby manufacture a glass-resin laminate having a five-layer structure. Note that, spectral transmittances of the adhesive layers at wavelengths of from 430 nm to 680 nm were 90% or more at the respective wavelengths. When the obtained glass-resin laminate was observed from a direction obliquely tilted at 45°, it was confirmed that whiteness of the acrylic sheet was reproduced as it was, and yellow was not exhibited. In this example, the whiteness of the acrylic can be reproduced. The acrylic is protected by the glass sheets, and hence has excellent abrasion resistance. In addition, the acrylic itself has ultraviolet durability. Thus, this example may be suitably applicable to display cases.

(Example 3) Two rectangular glass sheets each having a length of 500 mm, a width of 500 mm, and a thickness of 200 µm were prepared. As the glass sheets, alkali-free glass manufactured by Nippon Electric Glass Co., Ltd. was used. The glass sheets each formed by the overflow downdraw method were used in an unpolished state as they were. As a resin layer, a rectangular colorless and transparent acrylic sheet having a length of 500 mm, a width of 500 mm, and a thickness of 2 mm (manufactured by Mitsubishi Rayon Co., Ltd.) was prepared. As adhesive layers, optically transparent double-sided acrylic pressure-sensitive adhesive sheets each having a thickness of 200 µm were laminated on both surfaces of the resin layer, and then the two glass sheets were bonded so as to sandwich the resin layer, to thereby manufacture a glass-resin laminate having a five-layer structure. Note that, spectral transmittances of the adhesive layers at wavelengths of from 420 nm to 780 nm were 91% or more at the respective wavelengths. When the obtained glass-resin laminate was observed from a direction obliquely tilted at 45°, it was confirmed that transparency of the acrylic sheet was reproduced as it was, and yellow was not exhibited. The acrylic itself has ultraviolet durability. Thus, this example may be suitably applicable to highly transparent windows.

(Example 4) Two rectangular glass sheets each having a length of 600 mm, a width of 600 mm, and a thickness of 100 µm were prepared. As the glass sheets, alkali-free glass manufactured by Nippon Electric Glass Co., Ltd. was used. The glass sheets each formed by the overflow downdraw method were used in an unpolished state as they were. As a resin layer, a cylindrical colorless and transparent acrylic sheet having a length of 600 mm, a width of 600 mm, a thickness of 4 mm, and a curvature radius of 3,000 mm (manufactured by Mitsubishi Rayon Co., Ltd.) was prepared. As adhesive layers, optically transparent double-sided acrylic pressure-sensitive adhesive sheets each having a thickness of 350 µm were laminated on both surfaces of the resin layer, and then the two glass sheets were arranged along a curved surface of the resin layer and bonded so as to sandwich the resin layer, to thereby manufacture a glass-resin laminate having a five-layer structure. Note that, spectral transmittances of the adhesive layers at wavelengths of from 400 nm to 780 nm were 92% or more at the respective wavelengths. When the obtained glass-resin laminate was observed from a direction obliquely tilted at 45°, it was confirmed that transparency of the acrylic sheet was reproduced as it was, and yellow was not exhibited. The acrylic sheet, the glass sheets, and the adhesive layers are highly transparent. Thus, this example may be suitably applicable to display cases each having a curved surface.

(Example 5) Two rectangular glass sheets each having a length of 600 mm, a width of 600 mm, and a thickness of 500 µm were prepared. As the glass sheets, soda glass manufactured by Nippon Electric Glass Co., Ltd. was used. The glass sheets each formed by the overflow downdraw method were formed so as to be bent into a cylindrical shape having a curvature radius of 1,000 mm. As a resin layer, a cylindrical colorless and transparent polycarbonate sheet having a length of 600 mm, a width of 600 mm, a thickness of 6 mm, and a curvature radius of 2,000 mm (manufactured by Takiron Co., Ltd.) was prepared. As adhesive layers, thermoplastic sheets (TPU) each having a thickness of 400 µm were laminated on both surfaces of the resin layer, and then the two glass sheets were bonded so as to sandwich the resin layer, to thereby manufacture a glass-resin laminate having a five-layer structure. Note that, spectral transmittances of the adhesive layers at wavelengths of from 430 nm to 700 nm were 90% or more at the respective wavelengths. Further, an ultraviolet absorbing agent was added to each of the adhesive layers, and hence the adhesive layers had ultraviolet shielding property. When the obtained glass-resin laminate was observed from a direction obliquely tilted at 45°, it was confirmed that transparency of the polycarbonate sheet was reproduced as it was, and yellow was not exhibited. Further, when a weather resistance test was conducted on the obtained glass-resin laminate for 1,000 hours with a xenon weather meter, it was confirmed that polycarbonate was not degraded. This example maybe suitably applicable to security windows each having impact resistance.

(Comparative Example 1) Two rectangular glass sheets each having a length of 500 mm, a width of 500 mm, and a thickness of 200 µm were prepared. As the glass sheets, alkali-free glass manufactured by Nippon Electric Glass Co., Ltd. was used. The glass sheets each formed by the overflow downdraw method were used in an unpolished state as they were. As a resin layer, a rectangular colorless and transparent acrylic sheet having a length of 500 mm, a width of 500 mm, and a thickness of 6 mm (manufactured by Mitsubishi Rayon Co., Ltd.) was prepared. As adhesive layers, thermoplastic sheets (TPU) each having a thickness of 400 µm were laminated on both surfaces of the resin layer, and then the two glass sheets were bonded so as to sandwich the resin layer, to thereby manufacture a glass-resin laminate having a five-layer structure. Note that, spectral transmittances of the adhesive layers at wavelengths of from 430 nm to 680 nm were less than 90% at the respective wavelengths, and the maximum value thereof was 88%. When the obtained glass-resin laminate was observed from a direction obliquely tilted at 45°, it was confirmed that yellow was exhibited.

### Industrial Applicability

The present invention can be suitably applicable to window materials of general buildings, high-rise buildings, or the like, skylight windows for roofs, covering materials for agricultural greenhouses, window materials for vehicles or the like as typified by automobiles and trains, substrates, cover glasses, and touch panels for electronic devices, and advertising boards, guide boards, or the like, which emit light in a planar shape.

### Reference Signs List

- 1: glass-resin laminate
- 2: glass sheet
- 3: resin layer
- 4: adhesive layer

## Claims

1. A glass-resin laminate having a laminating structure of at least three layers,
the glass-resin laminate comprising:
a glass sheet;
a resin layer; and
an adhesive layer for bonding the glass sheet and the resin layer,
wherein a spectral transmittance of the adhesive layer in at least a wavelength range of from 430 nm to 680 nm is 90% or more.

2. The glass-resin laminate according to claim 1, wherein the laminating structure comprises a laminating structure of five layers,
the laminating structure of five layers comprising:
two glass sheets arranged at both outermost-layers;
one resin layer interposed between the two glass sheet layers; and
two adhesive layers for bonding the two glass sheets and the one resin layer.

3. The glass-resin laminate according to claim 1 or 2, wherein the resin layer is transparent.

4. The glass-resin laminate according to any one of claims 1 to 3, wherein a thickness of the adhesive layer is 50 to 800 µm.

5. The glass-resin laminate according to any one of claims 1 to 4, wherein the glass sheet comprises alkali-free glass.

6. The glass-resin laminate according to any one of claims 1 to 5, wherein the glass sheet is manufactured by an overflow downdraw method.

7. The glass-resin laminate according to any one of claims 1 to 6, wherein the resin layer is made of a polycarbonate material or an acrylic material.

8. The glass-resin laminate according to any one of claims 1 to 7, wherein a thickness of the glass sheet is 100 to 300 µm.
